# NEW EUROPEAN PATENT SPECIFICATION

(11) **EP 0 502 255 B2**
(45) Date of publication and mention of the opposition decision: **01.10.2003**
(45) Mention of the grant of the patent: 11.06.1997
(21) Application number: 91121529.1
(22) Date of filing: 16.12.1991
(51) Int. Cl.: H04N 5/44

(54) **Improved television signal selection device**
Verbesserte Videosignalauswahlvorrichtung
Dispositif amélioré de sélection de signal vidéo

(30) Priority: 21.12.1990 IT 6803590
(43) Date of publication of application: 09.09.1992
(73) Proprietor: EDICO S.r.l., 00197 Roma (IT)
(72) Inventor: Dini, Roberto, I-10098 Rivoli (TO) (IT); Farina, Attilio, I-10127 Torino (IT)
(74) Representative: Eisenführ, Speiser & Partner

(56) References cited:
- EP-A- 0 328 440
- DE-A- 3 146 173
- DE-A- 3 243 610
- US-A- 4 488 179
- ntz, vol. 35, no. 6 (1982), pages 368 - 376; H.E. Krüger: "Das digitale Fernseherkennungssystem ZPS"

## Description

The present invention relates to an improved television signal selection device, comprising means for receiving and selecting said signals.

The invention is based on the knowledge of the fact that a television viewer is often interested in watching a given transmission (for instance a football match to be transmitted at 9pm on RAI 2); but the match has yet to start, it may be assumed that this will take place in half an hours time; while in the mean time RAI 2 is transmitting a political program, which is of no interest to the viewer in question, he thus changes channel to RAI 3 where a variety program is being transmitted, something which is more interesting for the viewer.

So as not to miss the beginning of the match, the viewer is obliged to periodically change channels to control the state of affairs on RAI 2; this is certainly inconvenient for viewer.

There are televisions and video recorders known that allow for the simultaneous viewing of two television transmissions; the so called P.I.P. (picture in picture) systems; undoubtedly these systems do allow for the following of a transmission while continuing to watch another; however they are rather expensive, as they require, apart from a double tuning and amplifying chain, also special memories and circuits for viewing the secondary image in reduced dimensions in a corner of the principle image; and apart from this, the presence of the second image disturbs the vision of the principle one, from which a notable part of the screen is subtracted.

EP-A-0328440 describes a television signal receiver which may be coupled to a memory card, onto which the user can store the identification codes of the desired programs; as soon as such codes are received the receiver automatically switches to the corresponding frequency.

DE-A-3243610 describes an arrangement for programmable controlling of a radio or television receiver which provides the emitters with priority data or blocking data, besides identification data.

"Das Digitale Fernseherkennungsystem ZPS" by H. E.Krüger, NTZ, Bd. 35, H. 6, PP. 368-376 describes the transmission, during the vertical retrace interval of a television signal, of digital signals for controlling television receivers or videorecorders.

The object of the present invention is to produce an improved television signal receiver that eliminates the above cited inconveniences.

According to the present invention the problem is solved by the features of claim 1.

Further aims and advantages of the present invention will become clear from the following description and annexed drawings, supplied as an explicit and nonlimiting example, wherein:
figure 1 represents a block diagram of part of a television receiver according to the invention;
figure 2 represents the command device of the apparatus of figure 1;
figure 3 represents the logic flow of the operations carried out by the receiver of figure 1, in a case that is directly of interest to the present invention.

During the course of the description the word channel indicates a frequency interval of which, according to the standards in force, the video and audio carriers are allocated of a television signal broadcaster; for example channel 30 comprises according to the C.C.I.R. standard the 542 to 550 MHz range of frequency. The word program indicates a television program, transmitted on a certain channel ( usually different from area to area), memorised in an appropriate memory and matched with a program number: for instance program 2 is generally denominated to the second RAI program in Italy, that in the Turin area, is in fact transmitted on channel 30. The word transmission indicates all that is to be transmitted, i.e. a film, a football match, a variety show, etc.

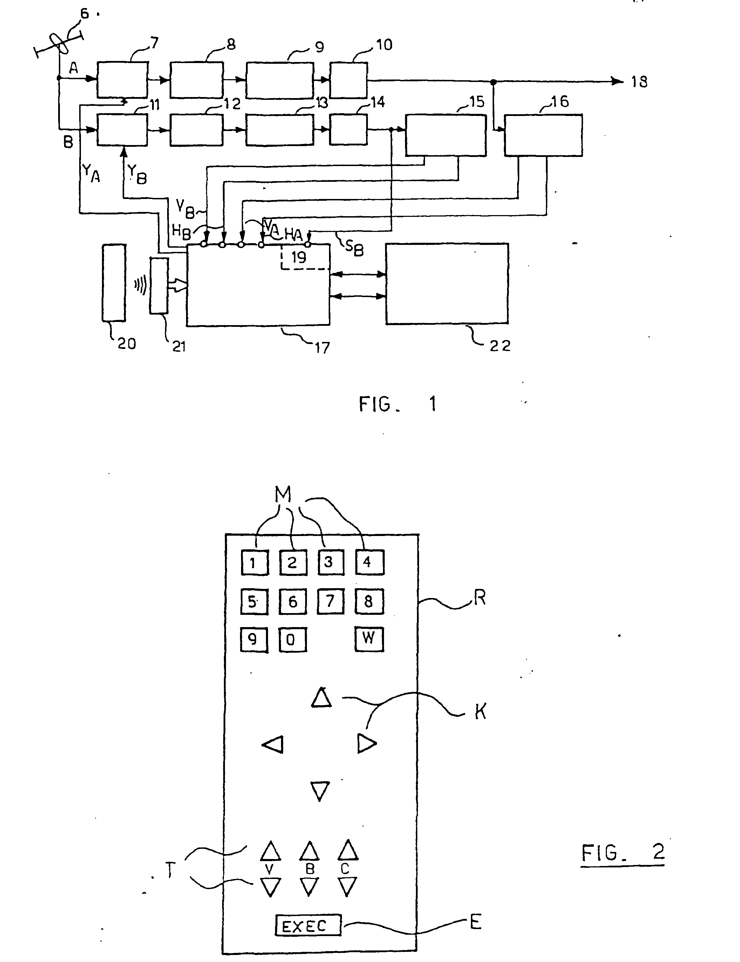

Figure 1 represents a block diagram of a part of a television receiver according to the invention. In figure 1 the reference number 6 indicates the receiving antenna; the reference numbers 7 and 11 relate to two tuners, of the type known, that have the task of simultaneously tuning two television signals deriving from two different television channels (A and B).

The two reference numbers 8 and 12 indicate two intermediate frequency amplifiers; with the numbers 9 and 13 two video detectors and numbers 10 and 14 refer to two video signal amplifiers, all of which being of the type known.

Reference number 15 indicates the circuit. also of the type known, that generates the vertical and horizontal synchronism signals, starting from the appropriate impulses contained in the secondary video signal B; while number 16 indicates an anzlogois circuit that generates the synchronism signals for the primary video signal A.

Reference number 20 indicates a remote control unit, for example the usual type using infra-red rays; this being coupled to a command circuit, indicated with the reference number 17, that represents the management unit of the receiver, and as an example can comprise of a microprocessor; which will be mentioned later.

Circuit 17 also receives the vertical and horizontal synchronism signals (VA, HA, VB, HB), removed from the two signals A and B, indicated with the reference symbol SB. Such signal comes from the detector circuit (19), contained in the control circuit 17, that is able to remove from the signal SB an identifying signal of the transmission received by means of the secondary channel (11, 12, 13, 14).

Two control signals depart from the circuit 17; one of them (YA) for the tuner 7, that selects the primary television signal A, and the other (YB) for the tuner 11 that selects the secondary television signal B.

Reference number 18 indicates an output terminal, to which the primary video signal A is available, destined to be decoded within its components in the known way, to be then applied to the image display, normally a colour television screen.

Reference number 22 indicates a read write digital memory, of the non volatile type, coupled to the control circuit 17, in which, according to a now universal procedure used in televisions, the tuning of the preferred television channels are memorised; said channels (for example 32) are each assigned a program number, that can be formed by means of the numbered keys of the remote control device 20 (note figure 2); in the way the user normally selects the preferred programs by simply depressing one or two of said keys; the determination if the case is a one or two digit number can for example be carried out by time, or by means of another commutation key.

For instance, in Italy it is normal to couple the channel RAI 1 to key 1, channel RAI 2 to key 2, channel RAI 3 to key 3, the channel Rete 4 to key 4, channel Canale 5 to key 5, etc., thus obtaining an easy mnemonic system (it is to be noted that in Italy, in given areas, such as Turin, Rome or Milan it is possible to receive 20-30 different television programs).

Figure 2 represents a command device for the appliance of figure 1; as already mentioned such device can be a normal remote control device using infra-red rays, indicated in figure 1 with the reference number 20.

In figure 2 the reference symbol R indicates the remote control device; symbol M indicates a plurality of numbered keys, of known and obvious functions, used for the normal functioning of the appliance, symbol T represents other usual keys, such as those of the volume control (V), brightness (B) and colour (C).

The reference symbol K indicates two pairs of keys in the form of isosceles triangles, with their pointed vertexes pointing externally, that can serve in moving a cursor on the screen, for instance in the reception of teletext signals. Symbol W is then used to indicate a key that, according to the invention, is used for programming the change of channel, to a determined second channel, as soon as a successive transmission starts, respective to that running in that moment.

To be more precise, taking into consideration the previous example, it may be supposed that the tuner 7 is tuned to RAI 3 (for example, in Turin, the television channel 40, coupled to key 3), that is transmitting a variety show. that the user is watching; however the user would also like to follow a football match due to start in approximately half an hour on RAI 2 (channel 30, coupled to key 2).

The user must depress the key W so as to automatically program the channel change; circuit 17, having received the command, provides for the superimposed viewing on the screen, with a known system (for example O.S.D. i.e. on screen display) by means of a character generator with the words: DESIRED PROGRAM ? with which it asks the user to indicate the program on which he desires the commutation to take place.

The user then depresses key 2, to indicate that the commutation is to take place on program 2; this completes the operation: circuit 17 will then provide for the tuning of the program 2; i.e. channel 30 by means of the auxiliary tuner 11, and to watch over the relative identification signal, removed by means of circuit 19 from signal SB, coming from circuit 14, so as to verify when the transmission change occurs, i.e. when the football match begins.

As soon as this is verified, circuit 17 provides to tune the principle tuner 7 to program 2 (channel 30), so as to satisfy the users wish.

There are systems already known in which an identification signal is coupled to a television signal; for example the known V.P.S. system (Video Programming System) that was studied so as to automatically program a video recorder; this system has been use in Germany since 1985; the system is the following: the television signal transmitted contains (during the interval of vertical return) a label that contains in a coded form the data for identifying the broadcasting station and the program being broadcasted; for further details the following article can be referred to: "Das digitale Femsehkennungssystem ZPS", NTZ, Bd 35, H. 6 by H.E. Kruger, and the article: "Videotext programmiert Videoheimgeraete" in the magazine Rundfunktechische Mitteilungen, Jahrg. 30 (1986) H. 5.

Video recorders are known that contain V.P.S. decoder systems; these are used to automatically carry out the recording on the video tape of programs selected by the user.

Circuit 19 described above could therefore contain a V.P.S. decoder. It has been proposed to cancel the V P.S. label when an advertisement is transmitted; it is therefore important that circuit 17 carries out the program change only when it detects a label being different from the previous one, and not simply when the label is missing.

It is also possible that the awaited program be late and another program is transmitted, to fill in the time, such as a serial or a cartoon; so as to avoid that in such cases the program change is carried out at the beginning of such unpublicised transmission, a more complete version can be furnished, the management of which being obviously more involved; in this case it would be necesssary to provide the V.P.S. decoder a label relative to the transmission desired as is the case with video recorders: such label can often be extracted by the specialised publications where it is printed in the form of a bar code, easily read and without errors with an appropriate optical pen, with which several models are supplied; alternatively it is necessary to provide the label manually using the command key board, as always extracting it from the specialised publications dealing with television transmissions, or extracting it from teletext signals, relative to the pages covering television programs, in cases in which the teletext contains V.P.S. codes.

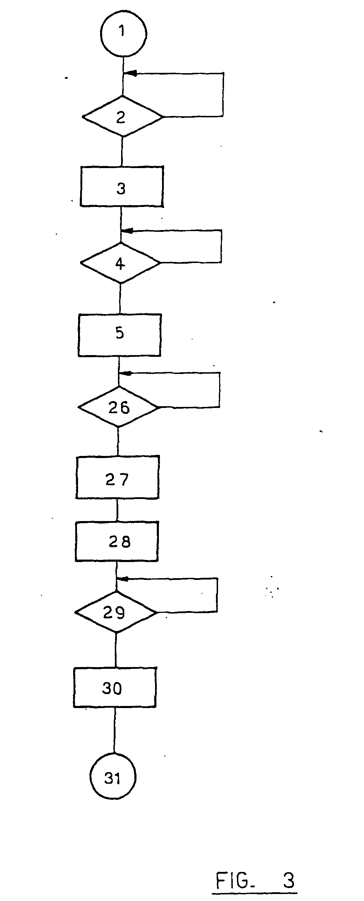

Figure 3 schematically represents the logic stream of the operation carried out by circuit 17 in the case of the described memorising function of an automatic channel change.

Circuit 17 can be realised with a cabled logic system or with a system of programed logic indifferently, i.e. utilising a microprocessor in union with a list of operative instructions, contained in an appropriate memory of the ROM type (read only); a system such as the second is generally less expensive than the first, also due to the fact that televisions and video recorders generally contain one or more microprocessors.

Block 1 is a conventional starting block; it passes control to the successive block 2.

Block 2 is a control block; it controls whether the key W has been depressed on the remote control device 20; in the affirmative case control passes to the successive block 3; in the negative case control returns back to block 2; in all the control blocks of this figure the YES output is designed in the lowersection, whereas the NO output is laterally designed to the right.

Block 3 provides for the words "DESIRED PROGRAM?" memorised in its list of instructions; to be displayed on the screen, by means of a character generator, the control then passes to the successive block 4. Block 4 is a control block; it controls whether the user has depressed a numbered key; in the affirmative case control passes to block 5, whereas in the negative the control returns back to block 4.

Block 5 provides for the corresponding number of the key depressed to be displayed on the screen; control then passes to the successive block 26.

Block 26 is a control block; it controls whether the user has depressed a numbered key or whether a given length of time has passed (2 seconds for instance); in the affirmative case control passes to the successive block 27; whereas in the negative control returns back to block 26.

Block 27 provides for the the second number, if the corresponding key has been pressed, to be displayed on the screen; reads in the memory 22 the instructions for turning the indicated program and then passes the control to the successive block 28.

Block 28 provides for the tuning of the auxiliary tuner 11 according to the instructions read in the memory 22; activates the circuit 19; cancels the writing on the display and passes the control to block 29.

Block 29 is a control block; it controls whether the transmission change indicated by the identifying signal relative to circuit 19 has taken place; in the affirmative case control passes to the successive block 30; whereas in the negative the control returns back to block 29.

Block 30 provides for the commanding of the program commutation also tuning the principle tuner 7 on the transmission that is beginning; control then passes to block 31.

Block 31 is a conventional end of operations block; control then passes to block 1 or another suitable control block of the system.

The characteristics of the described device result in being clear from the effected description and annexed drawings.

From the effected description the advantages of the device object of the present description also result in being clear.

In particular they consist in the fact that it is possible for the user to simply program an automatic program change.

One of the possible variants could be that of providing as a transmission identifying signal, a signal being different from V.P.S.. That comes about from the establishment of the fact that the transmission identifying signal, in accordance to the present invention, does not need all the information contained in the V.P.S. codes, as the programming of the automatic transmission change does not require the use of codes regarding the transmission classification, the duration of the same, etc.

It is possible therefore to utilise a more concise transmission identifying signal, containing only the data necessary for completing the present invention and that it be inserted and arranged for this purpose by the transmitter, in a particular line chosen from those that make up the frame return for example, or in another point of the television signal, that allows for the addition of further information.

## Claims

1. Television signal receiver:
- comprising means (R, W, 20) for entering data specifying an automatic programme change,
- means (17, 21, 22) for selecting a television channel other than a tuned-in television channel in accordance with the entered data,
- means (19) for providing an identifying signal identifying a programme or a change of a programme transmitted on the selected channel,
- means (17) for detecting a change of the programme transmitted on the selected channel in response to the identifying signal, and
- tuning means (7, 17) for tuning the receiver automatically into the selected channel to perform the automatic programme change,
wherein
- the automatic programme change is specified by data identifying only the selected channel and entered while said tuned in television channel is tuned in, and
- the tuning means (7, 17) tune into the selected channel solely in response to the first change of the programme detected by the detecting means (17) subsequent to the entering of said data.

2. Television signal receiver according to claim 1, **characterized by** the fact that said means for detecting such transmission beginning comprise a second tuner (11).

3. Television signal receiver according to claim 2, **characterized by** the fact that said means for detecting such transmission beginning comprise a second tuner (11) and a second amplifying chain and television signal detectors (12, 13, 14).

4. Television signal receiver according to claim 1, **characterized by** the fact that said means for detecting such transmission beginning and automatically carry out the relative selection comprise a control circuit (17).

5. Television signal receiver according to claim 4, **characterized by** the fact that said control circuit (17) comprises a microprocessor.

6. Television signal receiver according to claim 4, **characterized by** the fact that said control circuit (17) controls said second tuner (11).

7. Television signal receiver according to one or more of the previous claims, **characterized by** the fact that said means (17, 19) for detecting the beginning of the transmission to be selected are sensitive to a transmission identification signal, contained in the television signal received.

8. Television signal receiver according to claim 7, **characterized by** the fact that said identification signal is transmitted during the vertical return internal of the television signal.

9. Television signal receiver according to claim 7, **characterized by** the fact that said means (17) for detecting the beginning of a transmission to be selected comprise a circuit (19) to detect an utilise said identification signal contained in the television signal received on said alternative program.

10. Television signal receiver according to claim 9, **characterized by** the fact that said means (17) for detecting the beginning of a transmission to be selected provide for the memorising of said identification signal contained in the received television signal of said alternative program and detected by said circuit (19) as soon as the selection requirement is carried out.

11. Television signal receiver according to claim 10, **characterized by** the fact that said means (17) for detecting the beginning of a transmission to be selected comprise a signal comparator (29) for comparing said identification signal received on said alternative program with said identification signal previously memorised.

12. Television signal receiver according to claim 10, **characterized by** the fact that said means (17) for detecting the beginning of a transmission to be selected provide for and carry out the relative selection as soon as the comparator (29) has detected a change of said identification signal.

13. Television signal receiver according to claim 9, **characterized by** the fact that said detecting circuit (19) comprises a V.P.S. decoder.

14. Television signal receiver according to claim 1, **characterized by** the fact that said means for accepting and memorising request to select a determined transmission comprise a suitable command key (W).

15. Television signal receiver according to claims 4 and 14, **characterized by** the fact that said control circuit (17) provides for, as soon as it has detected that said command key (W) has been depressed, to display to the user a request to indicate the program on which the automatic communication will have to take place.

16. Television signal receiver according to claim 15, **characterized by** the fact that said display is obtained by means of an O.S.D. system.

17. Television signal receiver according to claim 4, **characterized by** the fact that said control circuit (17) is realised with a system of cabled logic.

18. Television signal receiver according to claim 4, **characterized by** the fact that said control circuit (17) is realised with a system of programmed logic.

## Patentansprüche

1. Fernsehsignalempfänger, mit einer Einrichtung (R, W, 20) zum Eingeben von Daten, die einen automatischen Programmwechsel festlegen, einer Einrichtung (17, 21, 22) zum Auswählen eines anderen Fernsehkanals als dem eingestellten Fernsehkanal entsprechend den eingegebenen Daten, einer Einrichtung (19) zum Bereitstellen eines identifizierenden Signals, das ein Programm oder einen Wechsel eines Programms, das auf dem ausgewählten Kanal gesendet wird, identifiziert, einer Einrichtung (17) zum Erfassen einer Änderung des auf dem selektierten Kanal gesendeten Programms als Reaktion auf das Identifizierungssignal, und einer Abstimmeinrichtung (7, 17) zum automatischen Abstimmen des Empfängers auf den ausgewählten Kanal zum Ausführen des automatischen Programmwechsels,
wobei der automatische Programmwechsel durch Daten bestimmt ist, welche nur den ausgewählten Kanal identifizieren und welche eingegeben wurden, während der eingestellte Fernsehkanal eingestellt ist, und die Abstimmeinrichtung (7, 17) den ausgewählten Kanal allein als Reaktion auf die durch die Erfassungseinrichtung (17) erfaßte erste Programmänderung einstellt, nachdem die Daten eingegeben wurden.

2. Fernsehsignalempfänger nach Anspruch 1,
**dadurch gekennzeichnet, daß** die Einrichtung zum Erfassen eines solchen Übertragungsbeginns eine zweite Abstimmeinrichtung (11) umfaßt.

3. Fernsehsignalempfänger nach Anspruch 2,
**dadurch gekennzeichnet, daß** die Einrichtung zum Erfassen des Übertragungsbeginns eine zweite Abstimmeinrichtung (11) und eine zweite Verstärkerkette und Fernsehsignaldetektoren (12, 13, 14) umfaßt.

4. Fernsehsignalempfänger Anspruch 1,
**dadurch gekennzeichnet, daß** die Einrichtung zum Erfassen des Übertragungsbeginns und zum automatischen Ausführen der relativen Selektion eine Steuerungsschaltung (17) umfaßt.

5. Fernsehsignalempfänger nach Anspruch 4,
**dadurch gekennzeichnet, daß** die Steuerungsschaltung (17) einen Mikroprozessor umfaßt.

6. Fernsehsignalempfänger nach Anspruch 4,
**dadurch gekennzeichnet, daß** die Steuerungsschaltung (17) die zweite Abstimmvorrichtung (11) steuert.

7. Fernsehsignalempfänger nach einem oder mehreren der
vorstehenden Ansprüche,
**dadurch gekennzeichnet, daß** die Einrichtung (17, 19) zum Erfassen des Beginns der Übertragung, die auszuwählen ist, auf ein Übertragungsidentifikationssignal anspricht, das in dem empfangenen Fernsehsignal enthalten ist.

8. Fernsehsignalempfänger nach Anspruch 7,
**dadurch gekennzeichnet, daß** das Identifikationssignal während des vertikalen Rücklaufs innerhalb des Fernsehsignals übertragen wird.

9. Fernsehsignalempfänger nach Anspruch 7,
**dadurch gekennzeichnet, daß** die Einrichtung (17) zum Erfassen des Beginns einer auszuwählenden Übertragung eine Schaltung (19) zum Erfassen und Verwenden des Identifikationssignals umfaßt, das in dem Empfangssignal enthalten ist, das in dem alternativen Programm empfangen wird.

10. Fernsehsignalempfänger nach Anspruch 9,
**dadurch gekennzeichnet, daß** die Einrichtung (17) zum Erfassen des Beginns der zu selektierenden Übertragung zum Speichern des Identifikationssignals vorgesehen ist, das in dem empfangenen Fernsehsignal des alternativen Programms enthalten ist und durch die Schaltung (19) erfaßt wird, sobald die Auswahlanforderung ausgeführt ist.

11. Fernsehsignalempfänger nach Anspruch 10,
**dadurch gekennzeichnet, daß** die Einrichtung (17) zum Erfassen des Beginns einer auszuwählenden Übertragung einen Signalkomparator (29) zum Vergleichen des in dem alternativen Programm empfangenen Identifikationssignals mit dem vorher gespeicherten Identifikationssignal umfaßt.

12. Fernsehsignalempfänger nach Anspruch 10,
**dadurch gekennzeichnet, daß** die Einrichtung (17) zum Erfassen des Beginns einer zu selektierenden Übertragung eine relative Auswahl vorsieht und ausführt, sobald der Komparator (29) eine Änderung des Identifikationssignals erfaßt hat.

13. Fernsehsignalempfänger nach Anspruch 9,
**dadurch gekennzeichnet, daß** die Erfassungsschaltung (19) einen V.P.S.-Dekodierer umfaßt.

14. Fernsehsignalempfänger nach Anspruch 1,
**dadurch gekennzeichnet, daß** die Einrichtung zum Entgegennehmen und Speichern einer Anforderung zur Auswahl einer vorbestimmten Übertragung eine geeignete Befehlstaste (W) umfaßt.

15. Fernsehsignalempfänger nach Anspruch 4 und 14,
**dadurch gekennzeichnet, daß** die Steuerungsschaltung (17), sobald sie erfaßt hat, daß die Befehlstaste (W) gedrückt wurde, für den Bediener eine Aufforderung zum Bezeichnen des Programms vorsieht, mit welchem die automatische Kommunikation stattfinden soll.

16. Fernsehsignalempfänger nach Anspruch 15,
**dadurch gekennzeichnet, daß** die Anzeige in einem O.S.D.-System erhalten wird.

17. Fernsehsignalempfänger nach Anspruch 4,
**dadurch gekennzeichnet, daß** die Steuerungsschaltung (17) mit einem System einer verdrahteten Logik verwirklicht.

18. Fernsehsignalempfänger nach Anspruch 4,
**dadurch gekennzeichnet**, daßdie Steuerungsschaltung (17) mit einem System einer programmierten Logik verwirklicht ist.

## Revendications

1. Récepteur de signal de télévision :
comprenant des moyens (R, W, 20) pour entrer des données spécifiant un changement de programme automatique,
des moyens (17, 21, 22) pour sélectionner un canal de télévision autre qu'un canal de télévision accordé conformément aux données entrées,
des moyens (19) pour fournir un signal d'identification identifiant un programme ou un changement d'un programme transmis sur le canal sélectionné,
des moyens (17) pour détecter un changement du programme transmis sur le canal sélectionné en réponse au signal d'identification, et
des moyens de réglage (7, 17) pour accorder le récepteur automatiquement sur le canal sélectionné pour réaliser le changement de programme automatique,
dans lequel
le changement de programme automatique est spécifié par des données identifiant seulement le canal sélectionné et entré alors que ledit canal de télévision accordé est accordé, et
les moyens de réglage (7, 17) s'accordent sur le canal sélectionné seulement en réponse au premier changement du programme détecté par les moyens de détection (17) subséquent à l'entrée desdites données.

2. Récepteur de signal de télévision selon la revendication 1, **caractérisé en ce que** lesdits moyens pour détecter un tel début de transmission comprennent un deuxième syntoniseur (11).

3. Récepteur de signal de télévision selon la revendication 2, **caractérisé en ce que** lesdits moyens pour détecter un tel début de transmission comprennent un deuxième syntoniseur (11) et une deuxième chaîne d'amplification et des détecteurs de signal de télévision (12, 13, 14).

4. Récepteur de signal de télévision selon la revendication 1, **caractérisé en ce que** lesdits moyens pour détecter un tel début de transmission et réaliser automatiquement la sélection correspondante comprennent un circuit de commande (17).

5. Récepteur de signal de télévision selon la revendication 4, **caractérisé en ce que** ledit circuit de commande (17) comprend un microprocesseur.

6. Récepteur de signal de télévision selon la revendication 4, **caractérisé en ce que** ledit circuit de commande (17) commande ledit deuxième syntoniseur (11).

7. Récepteur de signal de télévision selon l'une quelconque des revendications précédentes, **caractérisé en ce que** lesdits moyens (17, 19) pour détecter le début de la transmission à sélectionner sont sensibles à un signal d'identification de transmission, contenu dans le signal de télévision reçu.

8. Récepteur de signal de télévision selon la revendication 7, **caractérisé en ce que** ledit signal d'identification est transmis pendant l'intervalle de retour vertical du signal de télévision.

9. Récepteur de signal de télévision selon la revendication 7, **caractérisé en ce que** lesdits moyens (17) pour détecter le début d'une transmission à sélectionner comprennent un circuit (19) pour détecter et utiliser ledit signal d'identification contenu dans le signal de télévision reçu sur ledit programme alternatif.

10. Récepteur de signal de télévision selon la revendication 9, **caractérisé en ce que** lesdits moyens (17) pour détecter le début d'une transmission à sélectionner assurent la mémorisation dudit signal d'identification contenu dans le signal de télévision reçu dudit programme alternatif et détecté par ledit circuit (19) dès que la demande de sélection est exécutée.

11. Récepteur de signal de télévision selon la revendication 10, **caractérisé en ce que** lesdits moyens (17) pour détecter le début d'une transmission à sélectionner comprennent un comparateur de signal (29) pour comparer ledit signal d'identification reçu sur ledit programme alternatif avec ledit signal d'identification mémorisé précédemment.

12. Récepteur de signal de télévision selon la revendication 10, **caractérisé en ce que** lesdits moyens (17) pour détecter le début d'une transmission à sélectionner assurent et exécutent la sélection correspondante dès que le comparateur (29) a détecté un changement dudit signal d'identification.

13. Récepteur de signal de télévision selon la revendication 9, **caractérisé en ce que** ledit circuit de détection (19) comprend un décodeur V.P.S.

14. Récepteur de signal de télévision selon la revendication 1, **caractérisé en ce que** lesdits moyens pour accepter et mémoriser la demande de sélection d'une transmission déterminée comprennent une touche de commande appropriée (W).

15. Récepteur de signal de télévision selon les revendications 4 et 14, **caractérisé en ce que** ledit circuit de commande (17) assure dès qu'il a détecté que ladite touche de commande (W) a été enfoncée, l'affichage à l'utilisateur d'une demande pour indiquer le programme sur lequel la communication automatique devra se faire.

16. Récepteur de signal de télévision selon la revendication 15, **caractérisé en ce que** ledit affichage est obtenu au moyen d'un système analyseur optique.

17. Récepteur de signal de télévision selon la revendication 4, **caractérisé en ce que** ledit circuit de commande (17) est réalisé avec un système de logique câblée.

18. Récepteur de signal de télévision selon la revendication 4, **caractérisé en ce que** ledit circuit de commande (17) est réalisé avec un système de logique programmée.
